# EUROPEAN PATENT SPECIFICATION

(11) **EP 3 598 407 B1**
(45) Date of publication and mention of the grant of the patent: **12.07.2023**
(21) Application number: 18767669.7
(22) Date of filing: 16.03.2018
(51) Int. Cl.: G08C 15/00, B65G 61/00, G06Q 10/08, G06Q 30/02, G06Q 30/06, G06Q 50/28, H04B 7/15, H04W 4/38, H04Q 9/00

(54) **SYSTEM**
SYSTEM
SYSTÈME

(30) Priority: 16.03.2017 JP 2017051363; 12.04.2017 JP 2017079013; 12.04.2017 JP 2017079019
(43) Date of publication of application: 22.01.2020
(73) Proprietor: Softbank Corp., Tokyo 105-7529 (JP)
(72) Inventor: TOMIMOTO, Kazuma, Tokyo 105-7317 (JP); MIYASHITA, Masayuki, Tokyo 105-7317 (JP); MIKAMI, Manabu, Tokyo 105-7317 (JP); YAMAGUCHI, Ryo, Tokyo 105-7317 (JP); YOSHINO, Hitoshi, Tokyo 105-7317 (JP)
(74) Representative: Michalski Hüttermann & Partner Patentanwälte mbB
(86) International application number: PCT/JP2018/010617
(87) International publication number: WO 2018/169082

(56) References cited:
- WO-A1-2016/194235
- CN-U- 203 083 616
- JP-A- 2003 168 057
- JP-A- 2003 279 583
- JP-A- 2004 220 350
- JP-A- 2005 056 236
- JP-A- 2005 196 575
- JP-A- 2006 036 389
- JP-A- 2007 226 500
- JP-A- 2008 269 145
- JP-A- 2010 055 595
- JP-A- 2013 025 589
- JP-A- 2015 139 112
- JP-A- 2016 223 822

## Description

### BACKGROUND

### 1. TECHNICAL FIELD

The present invention relates to a system.

### 2. RELATED ART

A technique of managing an article in a warehouse by using an RFID attached to the article has been known from JP 2006-036389. Further CN 203 083 616 U relates to the technical field of warehouse logistics, and in particular discloses a tobacco warehouse monitoring system based on a wireless sensor network. The tobacco warehouse monitoring system comprises various wireless sensors, cluster points arranged corresponding to tobacco piles and central points respectively in communication connection with the cluster points which are arranged in each tobacco pile, and a server and a management center; the various wireless sensors at least comprise temperature and humidity sensors and oxygen content sensors; each cluster point is in communication connection with the various wireless sensors in the corresponding tobacco pile; and the cluster point further communicates and contacts with the management center. Tobacco warehouse parameters are monitored based on the wireless sensor network, automatic remote monitoring and alarm can be realized, and quick online monitoring and wireless automatic reporting are realized, so that an abnormal condition of tobacco is found in real time so as to process the abnormal condition in real time.

### SUMMARY

For managing an article and the like using an RFID attached to the article, it is desirable to provide a technique enabling a network for the management to be appropriately operated. This object is addressed by the subject matter of claim 1. Preferred embodiments of the invention are described in the dependent claims.

According to a first aspect of the present invention, a system is provided. The system may include a first relay device provided on a first network hierarchy level. The system may include a second relay device provided on a second network hierarchy level higher than the first network hierarchy level.

The first relay device may include a first information reception unit that receives target object information about a target object, the target object information being transmitted by a radio tag attached to the target object in accordance with a predetermined timing. The first relay device may include a first information storage unit that stores the target object information received by the first information reception unit. The first relay device may include a first change determination unit that determines whether there has been a change in a status of the target object, based on a status of reception of the target object information by the first information reception unit. The first relay device may include a first information transmission unit that transmits the target object information about the target object to the second relay device, when the first change determination unit determines that there has been the change in the status of the target object.

The second relay device may include a second information reception unit that receives information transmitted by the first information transmission unit. The second relay device may include a second information storage unit that stores the information received by the second information reception unit. The second relay device may include a second change determination unit that determines whether there has been a change in a position of at least one of the first relay device and the second relay device. The second relay device may include a second information transmission unit that transmits, when the second change determination unit determines that there has been the change in the position, the information stored in the second information storage unit to a third relay device provided on a third network hierarchy level higher than the second network hierarchy level.

The first information reception unit may receive the target object information from the radio tag, by using a first communication scheme, and the second information transmission unit may transmit the information stored in the second information storage unit to the third relay device by using a second communication scheme having higher reliability than the first communication scheme. The first communication scheme may be a communication scheme in which collision control is not performed, and the second communication scheme may be a communication scheme in which the collision control is performed.

The first change determination unit may determine whether there has been a change in the status of the target object, based on a timing at which the first information reception unit receives the target object information from the radio tag and a period in which the target object information is not received from the radio tag. The first relay device may further include a timing setting unit that sets a timing at which the first information transmission unit transmits the target object information about the target object to the second relay device, the first information transmission unit may transmit the target object information about the target object to the second relay device when the first change determination unit detects the change between a first timing and a second timing that are set to be consecutive by the timing setting unit, and the timing setting unit may set the timing in accordance with an instruction received via the second network hierarchy level and the first network hierarchy level.

The radio tag may include a sensor, the first information reception unit may receive detection information, detected by the sensor, from the radio tag, the first information storage unit may store the detection information received by the first information reception unit, the first relay device may include an information aggregation unit that aggregates the plurality of pieces of detection information, received by the first information reception unit from the plurality of radio tags, to generate aggregated information, and the first information transmission unit may transmit the aggregated information, generated by the information aggregation unit, to the second relay device. The first change determination unit may determine whether there has been a change in the status of the target object, based on the detection information received by the first information reception unit, and the first information transmission unit may transmit the aggregated information to the second relay device, when the first change determination unit determines that there has been the change in the status of the target object. The information aggregation unit may aggregate the plurality of pieces of detection information in accordance with an aggregation condition set in advance, the first relay device may further include an aggregation condition setting unit that sets the aggregation condition, and the aggregation condition setting unit may set the aggregation condition in accordance with an instruction received via the second network hierarchy level and the first network hierarchy level. The information aggregation unit may generate the aggregated information only including the detection information indicating abnormality, among the plurality of pieces of detection information received by the first information reception unit from the radio tag.

The summary clause does not necessarily describe all necessary features of the embodiments of the present invention. The present invention may also be a sub-combination of the features described above.

### BRIEF DESCRIPTION OF THE DRAWINGS

Fig. 1 schematically shows an example of a system 100;
Fig. 2 schematically shows an example of the system 100 applied to a management of a product 62;
Fig. 3 schematically shows an example of the system 100 applied to a management of a bridge 64;
Fig. 4 schematically shows an example of a functional configuration of an edge server 300;
Fig. 5 schematically shows an example of a functional configuration of an edge server 400;
Fig. 6 schematically shows an example of the system 100 applied to a management of an article 63;
Fig. 7 schematically shows an example of a cover area 301 of the edge server 300;
Fig. 8 schematically shows an example of a functional configuration of the edge server 300;
Fig. 9 schematically shows an example of a functional configuration of a communication terminal 600;
Fig. 10 schematically shows an example of a functional configuration of the edge server 400;
Fig. 11 schematically shows an example of the system 100 applied to a management of a product 62;
Fig. 12 schematically shows an example of a cover area 301 of the edge server 300;
Fig. 13 schematically shows an example of a functional configuration of the edge server 300;
Fig. 14 schematically shows an example of a functional configuration of the communication terminal 600; and
Fig. 15 schematically shows an example of a hardware configuration of a computer 1000 that functions as the edge server 300 or the edge server 400.

### DESCRIPTION OF EXEMPLARY EMBODIMENTS

Hereinafter, (some) embodiment(s) of the present invention will be described. The embodiment(s) do(es) not limit the invention according to the claims, and all the combinations of the features described in the embodiment(s) are not necessarily essential to means provided by aspects of the invention.

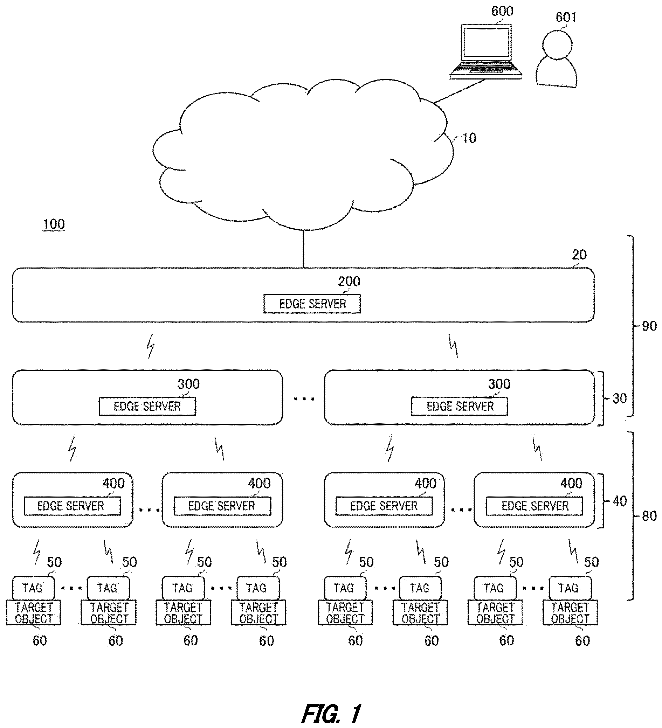

Fig. 1 schematically shows an example of a system 100. The system 100 according to the present embodiment includes a plurality of relay devices each provided on a corresponding one of a plurality of network hierarchy levels. The system 100 is provided by a telecommunications carrier for example.

Fig. 1 shows an example in which the system 100 includes an edge server 200 provided on a network 20, a plurality of edge servers 300 provided on a network hierarchy level 30 lower than the network 20, and a plurality of edge servers 400 provided on a network hierarchy level 40 lower than the network hierarchy level 30. The number of network hierarchy levels in the system 100 is not limited to this and may be any suitable number. The edge server 200, the edge servers 300, and the edge servers 400 are examples of a relay device.

In this example, a lower network hierarchy level 80 may comply with a first communication scheme and a higher network hierarchy level 90 may comply with a second communication scheme having higher reliability than the first communication scheme. For example, the first communication scheme is a communication scheme in which collision control is not performed, and the second communication scheme is a communication scheme in which the collision control is performed. For example, the first communication scheme may be what is known as Long-Range (LoRa), what is known as 5G Internet of Thing (IoT), and the like. For example, the second communication scheme may be Long Term Evolution (LTE), what is known as 4G, what is known as 5G, what is known as Narrow Band IoT (NB-IoT), and the like.

In the system 100 according to the present embodiment, the edge server 400 receives target object information about a target object 60 transmitted by the radio tag 50 attached to the target object 60 in accordance with a predetermined timing. The target object information is, for example, identification information for identifying the target object 60. The target object information may also be identification information for identifying the radio tag 50 attached to the target object 60. Then, in the system 100, the edge server 400, edge servers 300, and edge servers 200 in a hierarchal arrangement properly adjust the information and transmits the information to, for example, a communication terminal 600 of a user 601 that manages the target object 60, via a cloud network 10. The cloud network 10 includes the Internet and the like.

The target object 60 may be any object the status of which is to be managed. The attachment of radio tag 50 to the target object 60, may be arranging it on an outer surface of the target object 60, arranging it on an outer surface of a package of the target object 60 or arranging it in the package, or may be arranging it in the target object 60 depending on the target object 60.

The concept of properly adjusting and transmitting information may be transmitting only information necessary for the user 601, may be not transmitting information inappropriate for the user 601, may be transmitting certain information only, may be not transmitting uncertain information, may be transmitting only information appropriate for the user 601, or may be not transmitting information unnecessary for the user 601.

For example, after transmitting the information, received from the radio tag 50, to the edge server 300, the edge server 400 determines whether there has been a change in a status of the target object 60 based on a status of reception of the information from the radio tag 50, and transmits the information to the edge server 300 only when there has been the change. For example, the edge server 400 may determine whether there has been a change in the status of the target object 60, based on a timing at which the information is received from the radio tag 50 and a period in which the information is not received from the radio tag 50.

When the radio tag 50 transmits the information to the edge server 400 by using a communication scheme in which the collision control is not performed, the information transmitted by the radio tag 50 might fail to reach the edge server 400. For example, the transmission by the radio tag 50 may fail two or three times out often.

For example, under a circumstance where the edge server 400 receives the information transmitted by the radio tag 50 once in every 10 minutes, when the information is not received for 10 minutes after the reception of the information, there are possibilities that the target object 60 has moved out of a range of communication with the edge server 400 and that the communication has failed. Thus, when the information is not received for 10 minutes after the reception of the information, transmission to the communication terminal 600 with the target object 60 immediately determined to have moved out of the range of communication with the edge server 400 results in transmission of uncertain information.

Under the circumstance where the information transmitted by the radio tag 50 is received once in every 10 minutes for example, when the information is not received for a predetermined period, such as 30 minutes, after reception of the information, the edge server 400 according to the present embodiment determines that the target object 60 has moved out of the range of communication with the edge server 400 and transmits information to the communication terminal 600. Thus, uncertain information can be prevented from being transmitted.

For example, under a circumstance where the radio tag 50 including a sensor transmits detection information detected by the sensor to the edge server 400 in accordance with a predetermined timing, when the edge server 400 receives the detection information from a plurality of radio tags 50 arranged within a certain range, the edge server 400 may aggregate a plurality of pieces of detection information to generate aggregated information and transmit the aggregated information to the edge server 300. The sensor of the radio tag 50 may be any appropriate sensor. For example, the sensor of the radio tag 50 is a temperature sensor, a humidity sensor, a vibration sensor, an acceleration sensor, a gyro sensor, and/or the like. The detection information may be an example of the target object information.

For example, the edge server 400 transmits an average value or a representative value of a plurality of pieces of detection information, received from a plurality of radio tags 50, to the edge server 300 as the aggregated information, when a difference among the pieces of detection information is smaller than a predetermined threshold. For example, the edge server 400 groups pieces of detection information with a difference therebetween smaller than a predetermined threshold, among the pieces of detection information received from a plurality of radio tags 50, generates aggregated information including an average value or a representative value of the group and the detection information not included in the group, and transmits the aggregated information to the edge server 300. For example, the edge server 400 generates aggregated information only including detection information indicating abnormality, among the pieces of detection information received from a plurality of radio tags 50, and transmits the aggregated information to the edge server 300. With these configurations, the amount of information transmitted to the communication terminal 600 can be appropriately reduced from that in a case where all the pieces of detection information, received from a plurality of radio tags 50, are transmitted to the edge server 300.

The edge server 400 may aggregate a plurality of pieces of detection information in accordance with an aggregation condition set in advance. For example, the edge server 400 sets the aggregation condition in accordance with an instruction received from the communication terminal 600 via a network hierarchy level higher than the network hierarchy level 40 in the system 100 and the cloud network 10. Thus, for example, the user 601 can adjust the aggregation condition to adjust a consumption amount of the network resource. The edge server 400 may set the aggregation condition in accordance with an operation by an operator of the edge server 400 or the like.

The edge server 400 may transmit the target object information, received from the radio tag 50 and stored, to the edge server 300 in accordance with a timing set in advance. This timing may be set to be any timing such as every minute, every hour, every day, or every week. For example, when a change in a status of a target object is detected between a first timing and a second timing that are consecutive, the edge server 400 transmits the information to the edge server 300 at the second timing.

For example, the edge server 400 sets the timing in accordance with an instruction received from the communication terminal 600 via a network hierarchy level higher than the network hierarchy level 40 in the system 100 and the cloud network 10. Thus, for example, the user 601 can adjust the timing to adjust the consumption amount of the network resource. The edge server 400 may set the timing in accordance with an operation by an operator of the edge server 400 or the like.

As described above, with the system 100 according to the present embodiment, the amount of information transmitted to the communication terminal 600 through a hierarchal network and the cloud network 10 can be appropriately reduced, and a network load can be appropriately reduced. Furthermore, when the user 601 is charged in accordance with the communication amount, the amount charged can be appropriately reduced.

### [First embodiment]

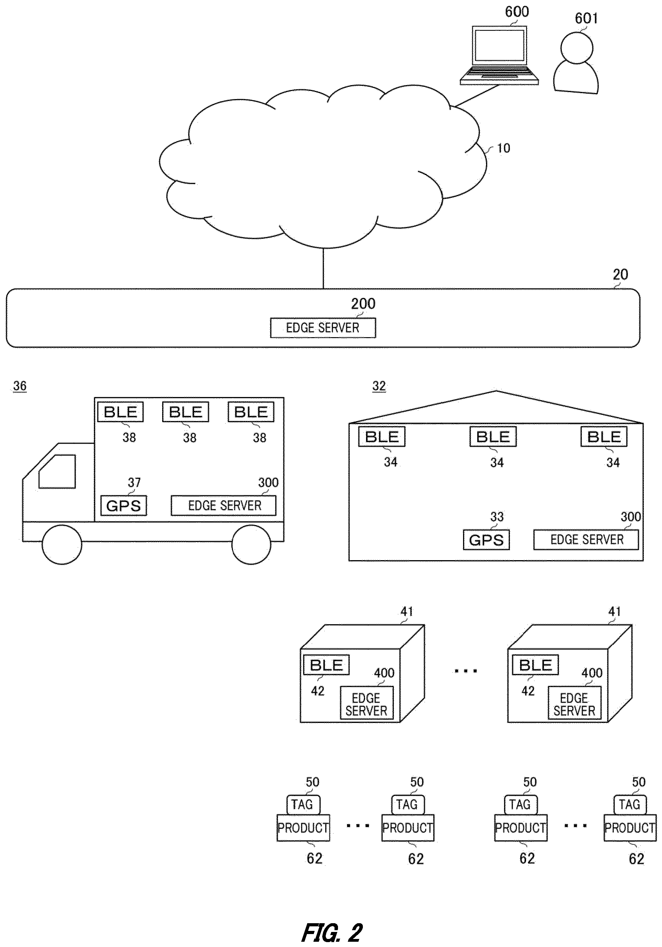

Fig. 2 schematically shows an example of the system 100 applied to a management of a product 62. Here, an example of a case is described where a flow in which the product 62 is put in a storage box 41 in a warehouse 32, and then the storage box 41 is loaded on and transported by a transportation vehicle 36 is managed. The edge server 400 is arranged in the storage box 41, and the edge server 300 is arranged in each of the warehouse 32 and the transportation vehicle 36.

The radio tag 50 attached to the product 62 transmits identification information for identifying the product 62, in accordance with a predetermined timing. The edge server 400 receives and stores information transmitted by the radio tag 50 in the storage box 41. The edge server 400 transmits the stored information to the edge server 300, upon determining that there has been a change in the status of the product 62. The edge server 400 may also transmit identification information of the edge server 400 or the storage box 41 to the network hierarchy level 30.

The edge server 300 stores the information received from the edge server 400, and transmits the information to the edge server 200. The edge server 300 may also transmit the identification information of the edge server 300 and the position information acquired by a GPS unit 33 to the edge server 200.

For example, when the product 62 is put in the storage box 41 and the identification information from the radio tag 50 is received for the first time, the edge server 400 determines that there has been a change that the product 62 has been put in. Then, the edge server 400 transmits the identification information of the product 62 the status of which has been determined to have changed, to the edge server 300. After transmitting the identification information of the product 62, the edge server 400 transmits no information to the edge server 300 even when the identification information is received from the radio tag 50 attached to the product 62, as long as the status of the product 62 remains unchanged.

For example, the edge server 300 transmits to the communication terminal 600, the identification information of the product 62, the identification information of the storage box 41, the identification information of the edge server 300, and the content of the change. Thus, the user 601 can recognize that the product 62 has been put in the storage box 41 in the warehouse 32 in which the edge server 300 is arranged.

The edge server 400 may fix the reception timing in accordance with a status of reception of the identification information from the radio tag 50, and set a determination criterion period which provides a criterion for determining whether there has been a change in the status of the product 62, according to the fixed reception timing. For example, when the identification information is received from the radio tag 50 once in every 10 minutes, the edge server 400 sets the determination criterion period to 30 minutes. The edge server 400 determines that there has been a change that the product 62 has been unloaded from the storage box 41, when the identification information of the product 62 is not received throughout the determination criterion period. Then, the edge server 400 may transmit the identification information of the product 62 for which the change has been determined, to the edge server 300.

For example, the edge server 300 transmits to the communication terminal 600, the identification information of the product 62, the identification information of the storage box 41, the identification information of the edge server 300, and the content of the change. Thus, the user 601 can recognize that the product 62 has been unloaded from the storage box 41 in the warehouse 32 in which the edge server 300 is arranged.

The edge server 400 may communicate with a Bluetooth (registered trademark) Low Energy (BLE) unit 42 arranged in the storage box 41. The BLE unit 42 may receive the information transmitted by a BLE unit 42 in the warehouse 32 to acquire information about position of the storage box 41 in the warehouse 32. The edge server 400 may transmit the position information of the storage box 41, received from the BLE unit 42, to the edge server 300.

For example, the edge server 300 transmits the identification information and the position information of the storage box 41 to the communication terminal 600. Thus, the user 601 can recognize the position of the storage box 41 in the warehouse 32.

When the position of the storage box 41 changes after the position information of the storage box 41 is transmitted to the edge server 300, the edge server 400 may transmit position information after the change to the edge server 300. For example, when the position of the storage box 41 changes in the warehouse 32, the BLE unit 42 receives information transmitted by another BLE unit 34 to determine that the position of the storage box 41 has changed and acquire position information after the movement. Then, the edge server 400 transmits the position information after the movement to the edge server 300.

For example, the edge server 300 transmits the identification information of the storage box 41 and the position information after the movement to the communication terminal 600. Thus, the user 601 can recognize that the storage box 41 has moved, and can recognize the position after the movement.

When the storage box 41 is loaded on the transportation vehicle 36, the information transmitted by the edge server 400 is received by the edge server 300 in the transportation vehicle 36. When the storage box 41 is loaded on the transportation vehicle 36, the BLE unit 42 receives the information transmitted by the BLE unit 38 in the transportation vehicle 36, to acquire information about the position of the storage box 41 in the transportation vehicle 36.

Now, the edge server 400 determines that the position of the storage box 41 has changed and transmits to the edge server 300, the position information of the storage box 41 and at least one of the identification information of the edge server 400 and the identification information of the storage box 41.

For example, the edge server 300 transmits to the communication terminal 600, the identification information of the storage box 41, the position information of the storage box 41, and the identification information of the edge server 300. Thus, the user 601 can recognize that the storage box 41 has been loaded in the transportation vehicle 36 in which the edge server 300 is arranged and can recognize the position of the storage box 41 in the transportation vehicle 36.

The edge server 300 may also transmit the position information, acquired by a GPS unit 37, to the communication terminal 600. After transmitting the position information, acquired by the GPS unit 37, to the communication terminal 600, when the position information changes, the edge server 300 may transmit position information after the change to the communication terminal 600.

With the configuration described above in which the information is transmitted to the communication terminal 600 only when the status of the product 62, the storage box 41, or the transportation vehicle 36 changes, the consumption amount of the network resource can be appropriately reduced.

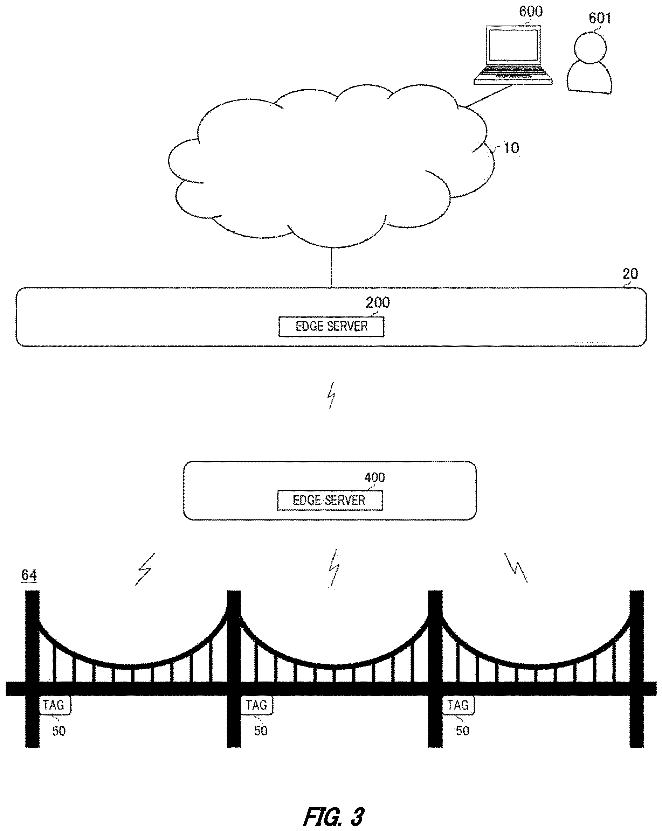

Fig. 3 schematically shows an example of the system 100 applied to a management of a bridge 64. Here, an example is described in which, under a circumstance where a plurality of radio tags 50 that are each arranged on a corresponding portion of the bridge 64 and each include a sensor transmit detection information detected by the sensors in accordance with a predetermined timing, the edge server 400 receives information transmitted by the plurality of radio tags 50, properly adjusts the information, and transmits the information to the communication terminal 600 via the edge server 200 and the cloud network 10.

For example, the sensor of the radio tag 50 may be a temperature sensor, a humidity sensor, a vibration sensor, or the like. The sensor of the radio tag 50 may also be a sensor that analyzes information detected by the temperature sensor, the humidity sensor, the vibration sensor, or the like, and outputs the analysis result. For example, the sensor outputs a level of deterioration of a portion to which the radio tag 50 is attached, as an analysis result. The plurality of radio tags 50 may have the same sensors, and the plurality of radio tags 50 may have sensors different from each other. Here, an example where the plurality of radio tags 50 have the same sensors will be mainly described.

The edge server 400 stores the detection information received from each of the plurality of radio tags 50. The edge server 400 may transmit the detection information to the edge server 200, upon determining that the status of the portion to which the radio tag 50 is attached has changed based on the detection information.

For example, after transmitting the detection information, received from the radio tag 50, to the edge server 200, the edge server 400 does not transmit detection information, received from the radio tag 50 thereafter, to the edge server 200 when a difference between the detection information and the transmitted detection information is smaller than a predetermined threshold. When a difference between the transmitted detection information and the detection information received from the radio tag 50 thereafter is larger than the predetermined threshold, the edge server 400 transmits the detection information to the edge server 200.

The edge server 400 may transmit an average value or a representative value of the detection information, received from a plurality of radio tags 50, to the edge server 200. After transmitting the average value or the representative value to the edge server 200, when a difference between the average value or the representative value transmitted and an average value or a representative value of the detection information received thereafter is smaller than a predetermined threshold, the edge server 400 does not transmit the average value or the representative value. When a difference between the average value or the representative value transmitted and an average value or a representative value of the detection information received thereafter is larger than the predetermined threshold, the edge server 400 transmits the average value or the representative value to the edge server 200.

The edge server 400 may store a normal range of detection information in advance, and may not transmit the detection information, received from the radio tag 50, to the edge server 200 when the detection information is within the normal range, and may transmit the detection information to the edge server 200 only when the detection information is outside the normal range.

The edge server 400 may not receive the detection information from some radio tags 50 of the plurality of radio tags 50, and when the detection information is received from the other radio tags 50, may use the detection information received from the other radio tags 50 to interpolate the detection information of the some radio tags 50. For example, when detection information is successfully received from radio tags 50 on both ends of three adjacent radio tags 50 and detection information cannot be received from the radio tag 50 at the center due to communication failure, an average value of the detection information received from the radio tags 50 on both ends may be stored and transmitted as the detection information of the radio tag 50 at the center.

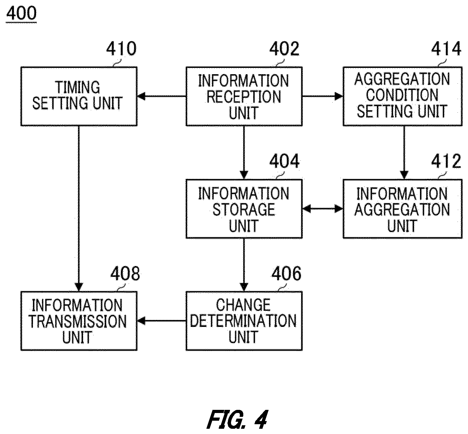

Fig. 4 schematically shows an example of a functional configuration of the edge server 400. The edge server 400 includes an information reception unit 402, an information storage unit 404, a change determination unit 406, an information transmission unit 408, a timing setting unit 410, an information aggregation unit 412, and an aggregation condition setting unit 414. The edge server 400 does not necessarily need to have all of these components. The edge server 400 may be an example of a first relay device.

The information reception unit 402 receives target object information about a target object, transmitted in accordance with a timing predetermined by a radio tag 50 attached to the target object. For example, the information reception unit 402 receives the identification information of the target object. For example, the information reception unit 402 receives detection information detected by the sensor of the radio tag 50. The information reception unit 402 may be an example of a first information reception unit.

The information storage unit 404 stores the information received by the information reception unit 402. The information storage unit 404 may be an example of a first information storage unit.

The change determination unit 406 determines whether there has been a change in the status of the target object based on a status of reception of the target object information by the information reception unit 402. For example, the change determination unit 406 determines whether there has been a change in the status of the target object, based on a timing at which the target object information is received by the information reception unit 402 from the radio tag 50 and a period in which the information reception unit 402 does not receive the target object information from the radio tag 50.

For example, the change determination unit 406 fixes a reception timing in accordance with a status of reception of the target object information from the radio tag 50, and sets a determination criterion period which provides a criterion for determining whether there has been a change in the status of the target object, according to the fixed reception timing. Then, the change determination unit 406 determines that there has been a change in the status of the target object, when the period in which the target object information is not received from the radio tag 50 exceeds the determination criterion period. For example, the change determination unit 406 determines that there has been a change in the status of the target object when a difference between pieces of detection information received by the information reception unit 402 from the radio tag 50 is larger than a predetermined threshold.

The change determination unit 406 may store a method of setting the determination criterion period, the predetermined threshold, and the like in advance. For example, the change determination unit 406 may receive, from, for example, the communication terminal 600 or the like via a network hierarchy level higher than the network hierarchy level 40, and store these pieces of information.

When the change determination unit 406 determines that there has been a change in the status of the target object, the information transmission unit 408 transmits the target object information of the target object stored in the information storage unit 404 to a network hierarchy level higher than the edge server 400. For example, the information transmission unit 408 transmits the target object information to the edge server 300. The information transmission unit 408 may transmit the target object information to the edge server 200.

The timing setting unit 410 sets a timing at which the information transmission unit 408 transmits the target object information stored in the information storage unit 404. The timing setting unit 410 may set the timing in accordance with an instruction received via a network hierarchy level higher than the network hierarchy level 40. For example, the timing setting unit 410 sets the timing in accordance with an instruction received from the communication terminal 600 via the cloud network 10, the edge server 200, and the edge server 300. The timing setting unit 410 may set the timing in accordance with an operation performed by the operator of the edge server 400 or the like.

When the change determination unit 406 detects a change in the status of the target object between consecutive timings set by the timing setting unit 410, the information transmission unit 408 may transmit the target object information of the target object to the edge server 300 at a later one of the timings.

The information aggregation unit 412 aggregates information stored in the information storage unit 404. For example, the information aggregation unit 412 aggregates a plurality of pieces of detection information stored in the information storage unit 404 to generate aggregated information. For example, the information aggregation unit 412 generates the aggregated information as an average value or a representative value of the plurality of pieces of detection information. The information aggregation unit 412 generates the aggregated information only including detection information indicating abnormality, among the plurality of pieces of detection information.

The aggregation condition setting unit 414 sets a condition for the aggregation of information by the information aggregation unit 412. The aggregation condition setting unit 414 may set the aggregation condition in accordance with an instruction received via a network hierarchy level higher than the network hierarchy level 40. For example, the aggregation condition setting unit 414 sets the aggregation condition in accordance with an instruction received from the communication terminal 600 via the cloud network 10, the edge server 200, and the edge server 300. The aggregation condition setting unit 414 may set the aggregation condition in accordance with an operation by the operator of the edge server 400 or the like. The information aggregation unit 412 may aggregate the information stored in the information storage unit 404 in accordance with the aggregation condition set by the aggregation condition setting unit 414.

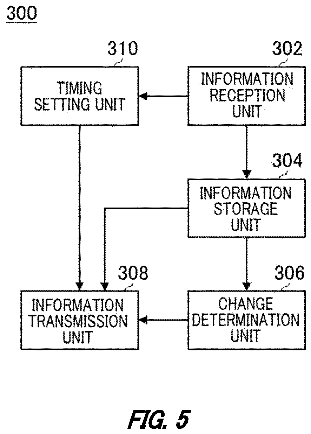

Fig. 5 schematically shows an example of a functional configuration of the edge server 300. The edge server 300 includes an information reception unit 302, an information storage unit 304, a change determination unit 306, an information transmission unit 308, and a timing setting unit 310. Note that the edge server 300 does not necessarily need to include all of these components. The edge server 300 may be an example of a second relay device.

The information reception unit 302 receives information transmitted by the information transmission unit 408. The information reception unit 302 may be an example of a second information reception unit.

The information storage unit 304 stores information received by the information reception unit 302. The information storage unit 304 may be an example of a second information storage unit.

The change determination unit 306 determines whether there has been a change in the position of at least one of the edge server 400 and the edge server 300. The change determination unit 306 may determine whether the position of the edge server 400 has changed, based on the position information received by the information reception unit 302 from the edge server 400. The change determination unit 306 may determine whether the position of the edge server 300 has changed based on the position information acquired from the GPS unit 37 arranged together with the edge server 300. The change determination unit 306 may be an example of a second change determination unit.

When the change determination unit 306 determines that the position of at least one of the edge server 400 and the edge server 300 has changed, the information transmission unit 308 transmits the information stored in the information storage unit 304 to an edge server provided on a network hierarchy level higher than the network hierarchy level 30. The information transmission unit 308 may be an example of a second information transmission unit.

The timing setting unit 310 sets a timing at which the information transmission unit 308 transmits information stored in the information storage unit 304. The timing setting unit 310 may set the timing in accordance with an instruction received via a network hierarchy level higher than the network hierarchy level 30. For example, the timing setting unit 310 sets the timing in accordance with an instruction received from the communication terminal 600 via the cloud network 10, the edge server 200, and the edge server 300. The timing setting unit 310 may set the timing in accordance with an operation by an operator by the edge server 300 or the like.

When the change determination unit 306 detects a change in the position of the edge server 300 or the edge server 400 between consecutive timings set by the timing setting unit 310, the information transmission unit 308 transmits the position of the edge server 300 or the edge server 400 after the movement to an edge server provided on a network hierarchy level higher than the network hierarchy level 30 at a later one of the timings.

### [Second embodiment]

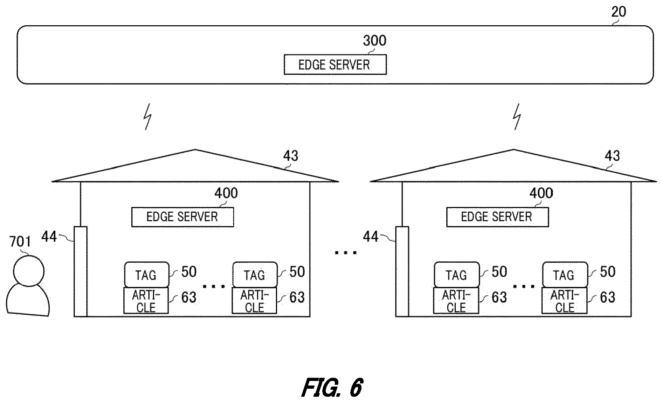

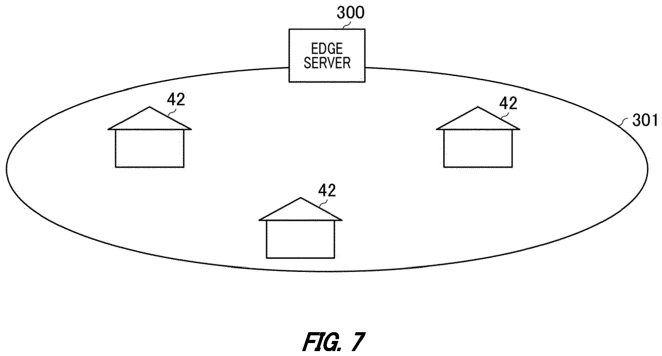

Fig. 6 schematically shows an example of the system 100 applied to a management of an article 63 in a storage 43. Fig. 7 schematically shows an example of a cover area 301 of the edge server 300. Here, an example is described where the storage 43 is an emergency storage that stores articles 63 related to emergency management.

The article 63 may be any article related to emergency management. For example, the article 63 is a generator, a fire extinguisher, an electric lamp, a helmet, emergency food, and the like.

The radio tag 50 attached to the article 63 transmits article information about the article 63 in accordance with a predetermined timing. The article information may include article identification information for identifying the article 63. Furthermore, the article information may include information such as eat by date and use by date of the article 63.

The radio tag 50 attached to the article 63 may include a sensor, and the article information may include detection information detected by the sensor. For example, when the article 63 has a content, the article information includes detection information detected by a sensor that detects the amount of the content. As a specific example, the radio tag 50 attached to a generator transmits article information including a gasoline remaining amount detected by a gasoline remaining amount sensor. The radio tag 50 attached to the generator may transmit article information including position information of the generator detected by a GPS sensor.

The edge server 400 in the storage 43 transmits the article information, received from the radio tag 50, to the edge server 300. The edge server 300 manages a state of the article 63 by using the article information received from the edge server 400. For example, the edge server 300 manages a use status of the article 63. The edge server 300 may manage the number of articles 63. The edge server 300 may manage the eat by date, the use by date, and the like of the article 63.

The storage 43 has a gate 44 with an opening/closing mechanism. For example, the gate 44 reads a payment settlement capable medium, such as a credit card or a mobile phone of a user 701, capable of executing payment settlement for rental and sales of the article 63, and allows a user 701 to access the storage 43 upon determining confirmation. The user 701 may request the rental or purchase of the article 63 he or she wants to borrow or purchase, by holding the radio tag 50 of the article and the payment settlement capable medium over a reader of the gate 44. The reader transmits the request information to the edge server 300 via the edge server 400.

Upon receiving request information for requesting the rental of the article 63, the edge server 300 determines a rental possibility in accordance with the state of the article 63. For example, the edge server 300 determines that rental is possible, when an unused period of the generator exceeds a predetermined period. With the rental of the generator determined to be possible when the unused period of the generator exceeds the predetermined period, the generator can be prevented from being unused for a long period of time, whereby the generator can be prevented from having the performance compromised.

Upon determining that the rental is possible, the edge server 300 executes rental processing for the article 63. The edge server 300 may execute payment settlement for a rental fee as the rental processing, by using information read from the payment settlement capable medium. The edge server 300 may cause the opening/closing mechanism of the gate 44 to be in an open state, as the rental processing.

The edge server 300 may set a rental period for the article 63, in accordance with the state of the article 63. For example, the edge server 300 causes a display in the storage 43, a mobile terminal owned by the user 701, and/or the like to display a set rental period of the article 63. As the display in the storage 43, the edge server 400 may include a display, the gate 44 may include a display, or another communication device may include a display. When the article 63 is not returned before the rental period of the article 63 elapses, the edge server 300 may execute payment settlement for a purchasing price by using information read from the payment settlement readable medium.

Upon receiving request information for requesting the purchasing of the article 63, the edge server 300 determines sales possibility in accordance with the state of the article 63. Upon determining that sales is possible, the edge server 300 executes sales processing for the article 63. As the sales processing, the edge server 300 may use the information read from the payment settlement capable medium to execute the payment settlement for the sales price. The edge server 300 may cause the opening/closing mechanism of the gate 44 to be in the open state, as the sales processing.

The edge server 300 may directly receive article information transmitted by the radio tag 50. For example, the edge server 300 manages the article 63 by using article information transmitted by the radio tag 50 attached to the article 63 such as a generator that has been rented. For example, the edge server 300 determines that the article 63 has been taken out from the cover area 301 based on a timing at which the article information is received from the radio tag 50 and a period in which the article information is not received from the radio tag 50. As a specific example, the edge server 300 fixes a reception timing in accordance with the status of reception of the article information from the radio tag 50, and sets a determination criterion period, as a criterion for determining whether the article 63 has been taken out from the cover area 301, according to the fixed reception timing. The edge server 300 determines that the article 63 has been taken out from the cover area 301 when a period in which the article information is not received from the radio tag 50 exceeds the determination criterion period. In this case, the edge server 300 may perform warning and the like for a subject that lends the article 63.

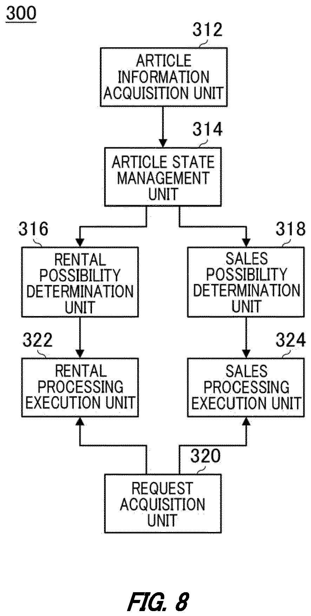

Fig. 8 schematically shows an example of a functional configuration of the edge server 300. The edge server 300 includes an article information acquisition unit 312, an article state management unit 314, a rental possibility determination unit 316, a sales possibility determination unit 318, a request acquisition unit 320, a rental processing execution unit 322, and a sales processing execution unit 324.

The article information acquisition unit 312 acquires article information transmitted by the radio tag 50 attached to the article 63 stored in the storage 43. The article information acquisition unit 312 may receive the article information from the edge server 400.

The article state management unit 314 uses the article information acquired by the article information acquisition unit 312 to manage the state of the article 63. For example, the article state management unit 314 manages the use status, eat by date, use by date, the number, and the like of the article 63. When the article 63 includes a content as in the cases of generators and fire extinguishers, the article state management unit 314 may manage the remaining amount of the content.

The rental possibility determination unit 316 determines the rental possibility of the article 63 based on the state of the article 63 managed by the article state management unit 314. For example, the rental possibility determination unit 316 determines that rental is possible when the unused period of the article 63 is longer than a predetermined period. For example, the rental possibility determination unit 316 determines that rental is possible if a period until the eat by date or the use by date of the article 63 is shorter than a predetermined period. For example, the rental possibility determination unit 316 determines that rental is possible when the number of articles 63 is larger than a predetermined number.

The sales possibility determination unit 318 determines the sales possibility of the article 63 based on the state of the article 63 managed by the article state management unit 314. For example, the sales possibility determination unit 318 determines that sales is possible when the unused period of the article 63 is longer than a predetermined period. For example, the sales possibility determination unit 318 determines that sales is possible if a period until the eat by date or the use by date of the article 63 is shorter than a predetermined period. For example, the sales possibility determination unit 318 determines that sales is possible when the number of articles 63 is larger than a predetermined number.

The request acquisition unit 320 acquires a rental request for the article 63. The request acquisition unit 320 acquires a purchase request for the article 63.

In response to the acquisition of the rental request for the article 63 by the request acquisition unit 320, the rental processing execution unit 322 acquires a determination result on the rental possibility obtained by the rental possibility determination unit 316, and executes the rental processing for the article 63 when determined that the rental is possible.

In response to the acquisition of the purchase request for the article 63 by the request acquisition unit 320, the sales processing execution unit 324 acquires a determination result on the sales possibility obtained by the sales possibility determination unit 318, and executes the sales processing for the article 63 when determined that the sales is possible.

In the embodiment described above, a case where the edge server 300 is the information processing device is mainly described, but this should not be construed in a limiting sense. The communication terminal 600 may be the information processing device.

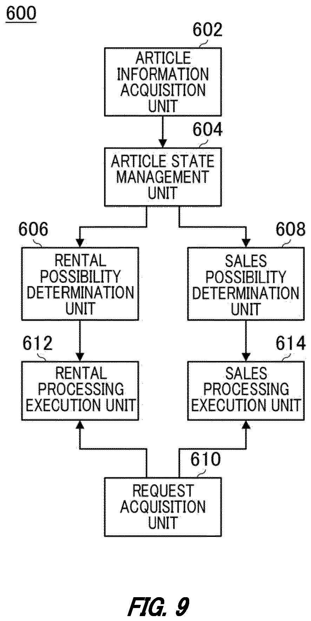

Fig. 9 schematically shows an example of a functional configuration of the communication terminal 600. The communication terminal 600 includes an article information acquisition unit 602, an article state management unit 604, a rental possibility determination unit 606, a sales possibility determination unit 608, a request acquisition unit 610, a rental processing execution unit 612, and a sales processing execution unit 614. Here, a difference from Fig. 8 will be mainly described.

The article information acquisition unit 602 acquires article information transmitted by the radio tag 50 attached to the article 63 stored in the storage 43. The article information acquisition unit 602 may receive the article information transmitted by the edge server 400 via the cloud network 10. The article state management unit 604, the rental possibility determination unit 606, the sales possibility determination unit 608, the request acquisition unit 610, the rental processing execution unit 612, and the sales processing execution unit 614 may execute processing similar to those executed by the article state management unit 314, the rental possibility determination unit 316, the sales possibility determination unit 318, the request acquisition unit 320, the rental processing execution unit 322, and the sales processing execution unit 324.

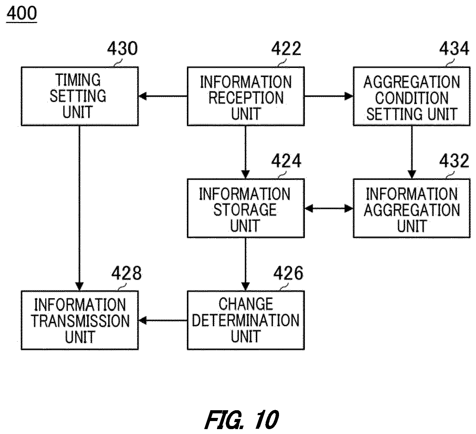

Fig. 10 schematically shows an example of a functional configuration of the edge server 400. The edge server 400 includes an information reception unit 422, an information storage unit 424, a change determination unit 426, an information transmission unit 428, a timing setting unit 430, an information aggregation unit 432, and an aggregation condition setting unit 434. The edge server 400 does not necessarily need to include all of these components. The edge server 400 may be an example of a relay device.

The information reception unit 422 receives article information about the article 63 transmitted by the radio tag 50 attached to the article 63 in accordance with a predetermined timing. For example, the information reception unit 422 receives identification information of an article. For example, the information reception unit 422 receives detection information detected by the sensor of the radio tag 50. The information storage unit 424 stores information received by the information reception unit 422.

The change determination unit 426 determines whether there has been a change in the status of the article 63, based on a status of reception of the article information by the information reception unit 422. For example, the change determination unit 426 determines whether there has been a change in the status of the article 63 based on a timing at which the information reception unit 422 receives the article information from the radio tag 50 and a period in which the information reception unit 422 does not receive the article information from the radio tag 50.

For example, the change determination unit 426 fixes a reception timing in accordance with a status of reception of the article information from the radio tag 50, and sets a determination criterion period which provides a criterion for determining whether there has been a change in the status of the article, according to the fixed reception timing. Then, the change determination unit 426 determines that there has been a change in the status of the article 63, when the period in which the article information is not received from the radio tag 50 exceeds the determination criterion period. For example, the change determination unit 406 determines that there has been a change in the status of the target object when a difference between pieces of detection information received by the information reception unit 422 from the radio tag 50 is larger than a predetermined threshold.

The change determination unit 426 may store a method of setting the determination criterion period, the predetermined threshold, and the like in advance. For example, the change determination unit 426 may receive, from, for example, the communication terminal 600 or the like via a network hierarchy level higher than the network hierarchy level 40, and store these pieces of information.

When the change determination unit 426 determines that there has been a change in the status of the article 63, the information transmission unit 428 transmits the article information of the article 63 stored in the information storage unit 424 to a network hierarchy level higher than the edge server 400. For example, the information transmission unit 428 transmits the article information to the edge server 300. The information transmission unit 428 may transmit the article information to the edge server 200.

The timing setting unit 430 sets a timing at which the information transmission unit 428 transmits the article information stored in the information storage unit 424. The timing setting unit 430 may set the timing in accordance with an instruction received via a network hierarchy level higher than the network hierarchy level 40. For example, the timing setting unit 430 sets the timing in accordance with an instruction received from the communication terminal 600 via the cloud network 10, the edge server 200, and the edge server 300. The timing setting unit 430 may set the timing in accordance with an operation performed by the operator of the edge server 400 or the like.

When the change determination unit 426 detects a change in the status of the article 63 between consecutive timings set by the timing setting unit 430, the information transmission unit 428 may transmit the article information of the article 63 to the edge server 300 at a later one of the timings.

The information aggregation unit 432 aggregates information stored in the information storage unit 424. For example, the information aggregation unit 432 aggregates a plurality of pieces of detection information stored in the information storage unit 424 to generate aggregated information. For example, the information aggregation unit 432 generates the aggregated information as an average value or a representative value of the plurality of pieces of detection information. The information aggregation unit 432 generates the aggregated information only including detection information indicating abnormality, among the plurality of pieces of detection information.

The aggregation condition setting unit 434 sets a condition for the aggregation of information by the information aggregation unit 432. The aggregation condition setting unit 434 may set the aggregation condition in accordance with an instruction received via a network hierarchy level higher than the network hierarchy level 40. For example, the aggregation condition setting unit 434 sets the aggregation condition in accordance with an instruction received from the communication terminal 600 via the cloud network 10, the edge server 200, and the edge server 300. The aggregation condition setting unit 434 may set the aggregation condition in accordance with an operation by the operator of the edge server 400 or the like. The information aggregation unit 432 may aggregate the information stored in the information storage unit 424 in accordance with the aggregation condition set by the aggregation condition setting unit 434.

### [Third embodiment]

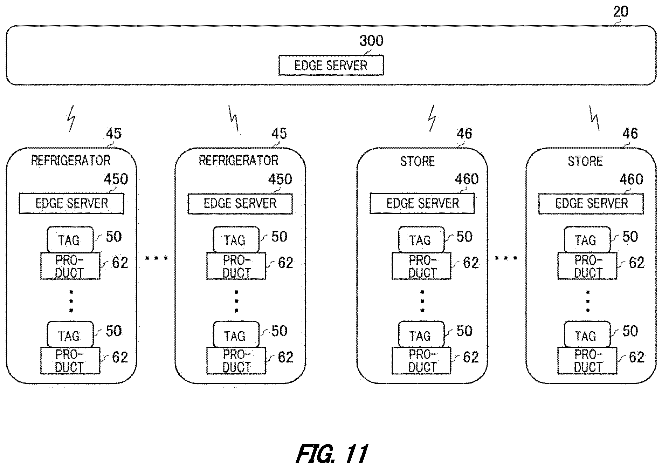

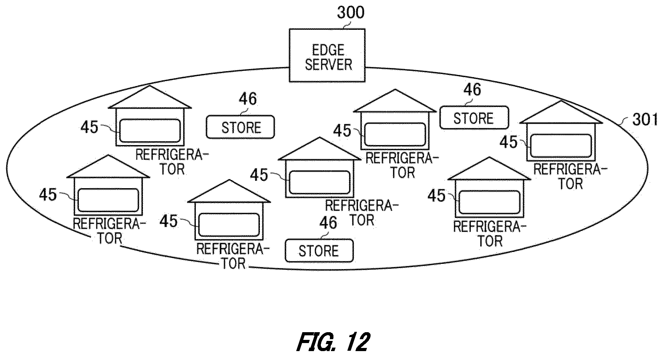

Fig. 11 schematically shows an example of the system 100 applied to a management of a product 62. Fig. 12 schematically shows an example of a cover area 301 of the edge server 300. The edge server 300 may be an example of the information processing device. The cover area 301 may be an example of an area.

In an example illustrated in Fig. 11 and Fig. 12, the edge server 300 manages a product 62 in a refrigerator 45 in a cover area 301. The edge server 300 receives product information about the product 62 transmitted by a radio tag 50 attached to the product 62 in the refrigerator 45, from an edge server 450 that is arranged in the refrigerator 45 in the cover area 301 and receives the product information. The product information may include identification information for identifying the product 62. The product information may include expiration information including at least one of eat by date and use by date of the product 62.

The edge server 450 may be only capable of receiving the product information transmitted by the radio tag 50 inside the refrigerator 45. Thus, the edge server 450 may be incapable of receiving product information transmitted by a radio tag 50 outside the refrigerator 45.

For example, when a product 62 is newly stored in the refrigerator 45, the edge server 450 transmits product information, transmitted by a radio tag 50 attached to the product 62, to the edge server 300. Thus, the edge server 300 can recognize any one of the refrigerators 45 in the cover area 301 stores the product 62 indicated by the product information received.

After transmitting the product information to the edge server 300, the edge server 450 may determine whether there has been a change in the status of the product 62 based on a status of reception of the product information from the radio tag 50, and may transmit the product information to the edge server 300 only when there has been the change. For example, first of all, the edge server 450 fixes a reception timing in accordance with the status of reception of the product information from the radio tag 50, and sets a determination criterion period which provides a criterion for determining whether there has been a change in the status of the product 62, according to the fixed reception timing. As a specific example, when the product information is received from the radio tag 50 once in every 10 minutes, the edge server 450 sets the determination criterion period to 30 minutes.

The edge server 450 may determine that the product 62 has been consumed when the product information of the product 62 is not received throughout the determination criterion period. The edge server 450 may transmit consumption information, indicating that the product 62 has been consumed, to the edge server 300 upon determining that the product 62 has been consumed. Thus, the edge server 300 can recognize that the product 62, indicated by the consumption information received, has been consumed.

The edge server 300 may generate prediction information indicating a demand prediction for the product 62 in the cover area 301, based on the consumption information received from a plurality of edge servers 450. For example, the edge server 300 generates the prediction information of a larger value for a larger consumption amount of the product 62. For example, the edge server 300 generates prediction information indicating a demand quantity of the product 62 in the cover area 301 based on the consumption amount of the product 62 in the cover area 301. The edge server 300 may transmit the prediction information generated to a store terminal of each of a plurality of stores 46. The store terminal may be an edge server 460 arranged in the store 46. The store terminal may also be any terminal used in the store 46.

The edge server 300 may generate consumption information while regarding that the product 62 with expiration information, included in the product information, elapsed is consumed, and generate prediction information based on the consumption information. The edge server 300 may generate prediction information by using both the consumption information and consumption information received from the edge server 450.

The edge server 300 may further acquire sales quantity information indicating a quantity of the product 62 sold by a store 46 in the cover area 301. The edge server 300 may acquire the sales quantity information by using any method. For example, the sales quantity information of the product 62 sold by the store 46 is acquired based on product information received from the edge server 460 in the store 46. The edge server 300 may acquire sales quantity information notified by a store manager, an employee, or the like of the store 46. The edge server 300 may cooperate with a POS system and the like to acquire of the sales quantity information of the store 46.

The edge server 300 may generate prediction information for each store 46 in the cover area 301 by using the consumption information and the sales quantity information. For example, the edge server 300 generates the prediction information for each store 46 by multiplying the demand quantity of a certain product 62 in the cover area 301 by a ratio of the sales quantity of each store 46 to the total number of sales of the product 62 by a plurality of stores 46 in the cover area 301. The edge server 300 may transmit the generated prediction information for each store 46 to the store terminal of each of a plurality of stores 46.

The edge server 300 may further acquire stock quantity information indicating a stock quantity of the product 62 in a store 46 in the cover area 301. The edge server 300 may acquire the stock quantity information by using any method. For example, the stock quantity information of the product 62 in the store 46 is acquired based on product information received from the edge server 460 in the store 46. The edge server 300 may acquire stock quantity information notified from a store manager, an employee, or the like of the store 46. The edge server 300 may cooperate with a POS system and the like to acquire of the stock quantity information of the store 46.

The edge server 300 may use the consumption information and the stock quantity information to generate prediction information for each store 46 in the cover area 301. For example, the edge server 300 generates prediction information for each store 46 by distributing the quantity, as a result of subtracting the total amount of stock of a certain product 62 in the plurality of stores 46 in the cover area 301 from the demand quantity of the product 62 in the cover area 301, among a plurality of stores 46. The edge server 300 may transmit the generated prediction information for each store 46 to the store terminal of each of a plurality of stores 46.

The edge server 300 may acquire position information indicating the position of an edge server 450. For example, the edge server 300 receives the position information from the edge server 450. The edge server 450 may include an unillustrated Global Positioning System (GPS) unit, and transmit the position information, acquired by the GPS unit, to the edge server 300. The edge server 450 may transmit position information, input by a user of the edge server 450, to the edge server 300. The refrigerator 45 may include the GPS unit. The edge server 450 may receive the position information acquired by the GPS unit, and transmit the position information to the edge server 300.

The edge server 300 may acquire position information indicating the position of an edge server 460. For example, the edge server 300 receives the position information from the edge server 460. The edge server 460 may include an unillustrated GPS unit, and transmit the position information, acquired by the GPS unit, to the edge server 300. The edge server 460 may transmit position information, input by a user of the edge server 460, to the edge server 300. The edge server 460 may receive the position information acquired by the GPS unit arranged in the store 46, and transmit the position information to the edge server 300.

The edge server 300 may further use the position information of the edge server 450 and the position information of the edge server 460, to generate the prediction information. For example, the edge server 300 uses the product information and consumer information received from the edge server 450 within a predetermined range from a store 46, to generate the prediction information for the store 46.

The edge server 300 may generate and store association information between the identification information for identifying a product 62 and the store 46 that has sold the product 62. The edge server 300 may generate the association information by using any method. For example, the edge server 300 generates the association information by using product information received from the edge server 460 in the store 46. The edge server 300 may generate the association information by using a sales record of the product 62 notified from a store manager, an employee, or the like of the store 46. The edge server 300 may cooperate with a POS system and the like to generate the association information.

Upon acquiring the consumption information, the edge server 300 may transmit the notification information to a store terminal of the store 46 that has sold the product 62 indicated to have been consumed by the consumption information. The notification information may indicate that the product 62 has been consumed. Thus, the side of the store 46 can recognize that the product 62 they have sold has been consumed, and thus can perform stocking of the product 62, or the like while considering the possibility of the same product 62 being purchased again.

The edge server 450 may be capable of receiving product information transmitted by the radio tag 50 outside the refrigerator 45. For example, the edge server 450 may be capable of receiving product information transmitted by the radio tag 50 inside a building provided with the refrigerator 45 and incapable of receiving product information transmitted by the radio tag 50 outside the building.

The edge server 450 may further manage a product 62 other than the product 62 in the refrigerator 45. For example, the product 62 such as toilet paper, tissue paper, and the like to which the radio tag 50 is attached is further managed.

Various products 62 may be managed with the edge server 450 that is arranged in the refrigerator 45 and can only receive the product information transmitted by the radio tag 50 inside the refrigerator 45, cooperating with the edge server 450 that is arranged outside the refrigerator 45 and cannot receive the product information transmitted by the radio tag 50 inside the refrigerator 45 but can receive the product information transmitted by the radio tag 50 outside the refrigerator 45.

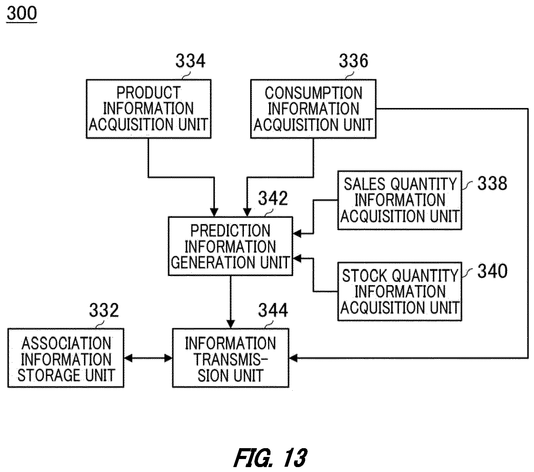

Fig. 13 schematically shows an example of a functional configuration of the edge server 300. The edge server 300 includes an association information storage unit 332, a product information acquisition unit 334, a consumption information acquisition unit 336, a sales quantity information acquisition unit 338, a stock quantity information acquisition unit 340, a prediction information generation unit 342, and an information transmission unit 344. The edge server 300 does not necessarily need to include all of these.

The association information storage unit 332 stores association information between a product 62 and a store 46 that has sold the product 62.

The product information acquisition unit 334 acquires product information. The product information acquisition unit 334 may receive the product information from the edge server 450. The product information acquisition unit 334 may receive the product information from the edge server 460.

The consumption information acquisition unit 336 acquires consumption information. The consumption information acquisition unit 336 may receive the consumption information from the edge server 450.

The sales quantity information acquisition unit 338 acquires the sales quantity information. The sales quantity information acquisition unit 338 may acquire the sales quantity information about the product 62 sold by the store 46 based on the product information received from the edge server 460 in the store 46. The sales quantity information acquisition unit 338 may acquire sales quantity information notified by a store manager, an employee, or the like of the store 46. The sales quantity information acquisition unit 338 may cooperate with a POS system and the like to acquire of the sales quantity information of the store 46.

The stock quantity information acquisition unit 340 acquires stock quantity information. The stock quantity information acquisition unit 340 may acquire the stock quantity information of the product 62 in the store 46, based on the product information received from the edge server 460 in the store 46. The stock quantity information acquisition unit 340 may acquire the stock quantity information notified from a store manager, an employee, or the like of the store 46. The stock quantity information acquisition unit 340 may cooperate with a POS system and the like to acquire of the stock quantity information of the store 46.

The prediction information generation unit 342 generates prediction information. The prediction information generation unit 342 may generate prediction information indicating demand prediction of the product 62 in the cover area 301, based on the product information acquired by the product information acquisition unit 334 and the consumption information acquired by the consumption information acquisition unit 336. For example, the prediction information generation unit 342 generates prediction information indicating the demand quantity of the product 62 in the cover area 301.

The prediction information generation unit 342 may further use the sales quantity information acquired by the sales quantity information acquisition unit 338 to generate prediction information for each of a plurality of stores 46. For example, the prediction information generation unit 342 generates the prediction information for each store 46 by multiplying the demand quantity of a certain product 62 in the cover area 301 by a ratio of the sales quantity by each store 46 to the total number of sales of the product 62 by a plurality of stores 46 in the cover area 301. For example, when the demand quantity of the product 62 is 100 and the ratio of the sales quantity between the first store 46 and the second store 46 is 4:1, the prediction information indicating that the demand quantity of the product 62 is 80 is generated for the first store 46, and the prediction information indicating that the demand quantity of the product 62 is 20 is generated for the second store 46.

The prediction information generation unit 342 may further use the stock quantity information acquired by the stock quantity information acquisition unit 340 to generate prediction information for each of a plurality of stores 46. For example, the prediction information generation unit 342 generates prediction information for each store 46 by distributing the quantity, as a result of subtracting the total amount of stock of a certain product 62 in the plurality of stores 46 in the cover area 301 from the demand quantity of the product 62 in the cover area 301, among a plurality of stores 46. For example, when the demand quantity of the product 62 is 100 and the total amount of stock in the first store 46 and the second store 46 is 60, prediction information indicating quantities as a result of distributing 40 which is the difference therebetween is generated. As a specific example, the prediction information indicating that the demand quantity of the product 62 is 20 is generated for the first store 46, and the prediction information indicating that the demand quantity of the product 62 is 20 is generated for the second store 46. The distribution may be performed by further using the sales quantity information of a plurality of stores 46. For example, when the ratio of the sales quantity between the first store 46 and the second store 46 is 3: 1, prediction information indicating the demand quantity of the product 62 is 30 is generated for the first store 46 and prediction information indicating the demand quantity of the product 62 is 10 is generated for the second store 46.

The information transmission unit 344 transmits the prediction information generated by the prediction information generation unit 342. The information transmission unit 344 may transmit the prediction information, generated by the prediction information generation unit 342, to a store terminal of the store 46 in the cover area 301. When the prediction information for each of a plurality of stores 46 is generated by the prediction information generation unit 342, the information transmission unit 344 may transmit each prediction information to a store terminal of a corresponding one of the plurality of stores 46.

The information transmission unit 344 may identify the store 46 that has sold the product 62 indicated to have been consumed by the consumption information acquired by the consumption information acquisition unit 336, by referring to the association information in the association information storage unit 332. Then, the information transmission unit 344 may transmit notification information for notifying the consumption of the product 62, to the store terminal of the identified store 46.

In the embodiment described above, an example of a case where the edge server 300 is the information processing device is mainly described. However, this should not be construed in a limiting sense. The communication terminal 600 may be the information processing device.

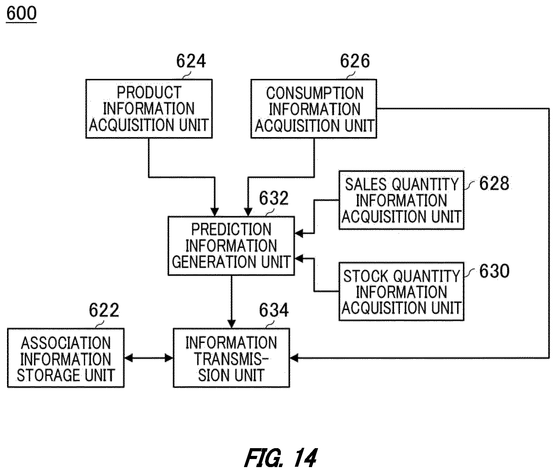

Fig. 14 schematically shows an example of a functional configuration of the communication terminal 600. The communication terminal 600 includes an association information storage unit 622, a product information acquisition unit 624, a consumption information acquisition unit 626, a sales quantity information acquisition unit 628, a stock quantity information acquisition unit 630, a prediction information generation unit 632, and an information transmission unit 634. Here, a difference from Fig. 13 is mainly described.

The association information storage unit 622 stores association information between a product 62 and a store 46 that has sold the product 62. For example, the association information storage unit 622 receives the product information transmitted by the edge server 460 through the network 10, and uses the product information to generate the association information. The association information storage unit 622 may generate and store the association information by using a sales record of the product 62 notified from a store manager, an employee, or the like of the store 46. The association information storage unit 622 may cooperate with a POS system and the like to generate and store the association information.

The product information acquisition unit 624 acquires product information. The product information acquisition unit 624 may receive, via the network 10, the product information transmitted by the edge server 450. The product information acquisition unit 624 may receive the product information transmitted by the edge server 460, via the network 10.

The consumption information acquisition unit 626 acquires consumption information. The consumption information acquisition unit 626 may receive the consumption information transmitted by the edge server 460 through the network 10.

The sales quantity information acquisition unit 628 acquires the sales quantity information. The sales quantity information acquisition unit 628 may acquire the sales quantity information of the product 62 by the store 46 based on the product information transmitted by the edge server 460 in the store 46. The sales quantity information acquisition unit 628 may acquire the sales quantity information notified from a store manager, an employee, or the like of the store 46. The sales quantity information acquisition unit 628 may cooperate with a POS system and the like to acquire the sales quantity information of the store 46.

The stock quantity information acquisition unit 630 acquires stock information. The stock quantity information acquisition unit 630 may acquire the stock quantity information of the product 62 in the store 46, based on the product information transmitted by the edge server 460 in the store 46. The stock quantity information acquisition unit 630 may acquire the stock quantity information notified from a store manager, an employee, or the like of the store 46. The stock quantity information acquisition unit 630 may cooperate with a POS system and the like to acquire of the stock quantity information of the store 46.

The prediction information generation unit 632 and the information transmission unit 634 may execute processing similar to those executed by the prediction information generation unit 342 and the information transmission unit 344.

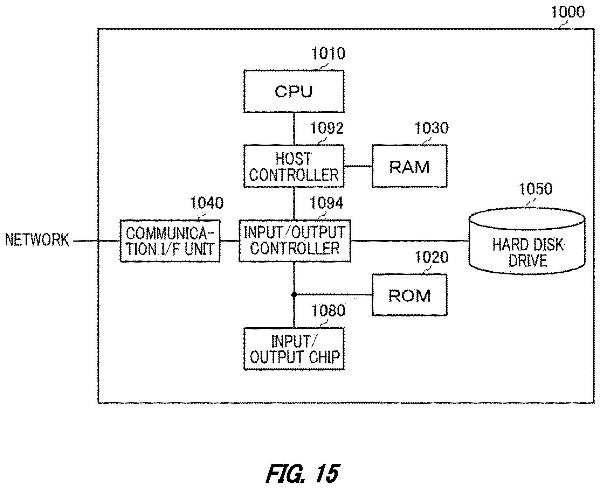

Fig. 15 schematically shows an example of a computer 1000 that functions as the edge server 300, the edge server 400, or the communication terminal 600. The computer 1000 according to the present embodiment includes a CPU peripheral unit and an input/output unit. The CPU peripheral unit includes a CPU 1010 and a RAM 1030 that are connected to each other by a host controller 1092. The input/output unit includes a ROM 1020, a communication I/F 1040, a hard disk drive 1050, and an input/output chip 1080 that are connected to the host controller 1092 by an input/output controller 1094.

The CPU 1010 operates according to programs stored in the ROM 1020 and the RAM 1030, thereby controlling each unit. The communication I/F 1040 performs wired or wireless communicates with another apparatus through a network. The communication I/F 1040 functions as hardware that performs communications. The hard disk drive 1050 stores a program and data used by the CPU 1010.

The ROM 1020 stores therein a boot program or the like executed by the computer 1000 at the time of activation, and/or a program depending on the hardware of the computer 1000. The input/output chip 1080 may also connect various input/output units via a parallel port, a serial port, a keyboard port, a mouse port, and the like to the input/output controller 1094.

A program provided to the hard disk drive 1050 via the RAM 1030 is provided by a user while being stored in a recording medium such as an IC card. The program is read from the recording medium, installed in the hard disk drive 1050 via the RAM 1030, and is executed by the CPU 1010.

A program that is installed in the computer 1000 and causes the computer 1000 to function as the edge server 400 may instruct the CPU 1010 and the like to cause the computer 1000 to function as each unit of the edge server 400. The computer 1000 reads information processing written in such programs to functions as the information reception unit 402, the information storage unit 404, the change determination unit 406, the information transmission unit 408, the timing setting unit 410, the information aggregation unit 412, and the aggregation condition setting unit 414 that are specific means based on cooperation between software and the various hardware resources described above. Furthermore, the computer 1000 reads information processing written in such programs to functions as the information reception unit 422, the information storage unit 424, the change determination unit 426, the information transmission unit 428, the timing setting unit 430, the information aggregation unit 432, and the aggregation condition setting unit 434 that are specific means based on cooperation between software and the various hardware resources described above. Then, by implementing calculation or processing of information in accordance with a purpose of use of the computer 1000 according to the present embodiment with these specific means, a unique edge server 400 suitable for the purpose of use is established.

A program that is installed in the computer 1000 and causes the computer 1000 to function as the edge server 300 may instruct the CPU 1010 and the like to cause the computer 1000 to function as each unit of the edge server 300. The computer 1000 reads information processing written in such programs to functions as the information reception unit 302, the information storage unit 304, the change determination unit 306, the information transmission unit 308, and the timing setting unit 410 that are specific means based on cooperation between software and the various hardware resources described above. Furthermore, the computer 1000 reads information processing written in such programs to functions as the article information acquisition unit 312, the article state management unit 314, the rental possibility determination unit 316, the sales possibility determination unit 318, the request acquisition unit 320, the rental processing execution unit 322, and the sales processing execution unit 324 that are specific means based on cooperation between software and the various hardware resources described above. Furthermore, the computer 1000 reads information processing written in such programs to functions as the association information storage unit 332, the product information acquisition unit 334, the consumption information acquisition unit 336, the sales quantity information acquisition unit 338, the stock quantity information acquisition unit 340, the prediction information generation unit 342, and the information transmission unit 344 that are specific means based on cooperation between software and the various hardware resources described above. Then, by implementing calculation or processing of information in accordance with a purpose of use of the computer 1000 according to the present embodiment with these specific means, a unique edge server 300 suitable for the purpose of use is established.

A program that is installed in the computer 1000 and causes the computer 1000 to function as the communication terminal 600 may instruct the CPU 1010 and the like to cause the computer 1000 to function as each unit of the communication terminal 600. The computer 1000 reads information processing written in such programs to functions as the article information acquisition unit 602, the article state management unit 604, the rental possibility determination unit 606, the sales possibility determination unit 608, the request acquisition unit 610, the rental processing execution unit 612, and the sales processing execution unit 614 that are specific means based on cooperation between software and the various hardware resources described above. Furthermore, the computer 1000 reads information processing written in such programs to functions as the association information storage unit 622, the product information acquisition unit 624, the consumption information acquisition unit 626, the sales quantity information acquisition unit 628, the stock quantity information acquisition unit 630, the prediction information generation unit 632, and the information transmission unit 634 that are specific means based on cooperation between software and the various hardware resources described above. Then, by implementing calculation or processing of information in accordance with a purpose of use of the computer 1000 according to the present embodiment with these specific means, a unique communication terminal 600 suitable for the purpose of use is established.

While the embodiment(s) of the present invention has (have) been described, the technical scope of the invention is not limited to the above described embodiment(s). It is apparent to persons skilled in the art that various alterations and improvements can be added to the above-described embodiment(s). It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### [Description of reference numerals]

10 network, 20 network, 30 network hierarchy level, 32 warehouse, 33 GPS unit, 34 BLE unit, 36 transportation vehicle, 37 GPS unit, 38 BLE unit, 40 network hierarchy level, 41 storage box, 42 BLE unit, 43 storage, 44 gate, 45 refrigerator, 46 store, 50 radio tag, 60 target object, 62 product, 63 article, 64 bridge, 100 system, 200 edge server, 300 edge server, 301 cover area, 302 information reception unit, 304 information storage unit, 306 change determination unit, 308 information transmission unit, 310 timing setting unit, 312 article information acquisition unit, 314 article state management unit, 316 rental possibility determination unit, 318 sales possibility determination unit, 320 request acquisition unit, 322 rental processing execution unit, 324 sales processing execution unit, 332 association information storage unit, 334 product information acquisition unit, 336 consumption information acquisition unit, 338 sales quantity information acquisition unit, 340 stock quantity information acquisition unit, 342 prediction information generation unit, 344 information transmission unit, 400 edge server, 402 information reception unit, 404 information storage unit, 406 change determination unit, 408 information transmission unit, 410 timing setting unit, 412 information aggregation unit, 414 aggregation condition setting unit, 422 information reception unit, 424 information storage unit, 426 change determination unit, 428 information transmission unit, 430 timing setting unit, 432 information aggregation unit, 434 aggregation condition setting unit, 450 edge server, 460 edge server, 600 communication terminal, 601 user, 602 article information acquisition unit, 604 article state management unit, 606 rental possibility determination unit, 608 sales possibility determination unit, 610 request acquisition unit, 612 rental processing execution unit, 614 sales processing execution unit, 622 association information storage unit, 624 product information acquisition unit, 626 consumption information acquisition unit, 628 sales quantity information acquisition unit, 630 stock quantity information acquisition unit, 632 prediction information generation unit, 634 information transmission unit, 1000 computer, 1010 CPU, 1020 ROM, 1030 RAM, 1040 communication I/F, 1050 hard disk drive, 1080 input/output chip, 1092 host controller, 1094 input/output controller

## Claims

1. A system (100) comprising:
a first relay device (400) provided on a first network hierarchy level (40); and
a second relay device (300) provided on a second network hierarchy level (30) higher than the first network hierarchy level (40), wherein
the first relay device (400) includes
a first information reception unit (402) configured to receive target object (60) information about a target object (60), the target object (60) information being transmitted by a radio tag (50) attached to the target object (60) in accordance with a predetermined timing;
a first information storage unit configured to store the target object (60) information received by the first information reception unit (402);
**characterized in that** the first relay device (400) further includes
a first change determination unit (406) configured to determine whether there has been a change in a status of the target object (60), based on a status of reception of the target object (60) information by the first information reception unit (402); and
a first information transmission unit (408) configured to transmit the target object (60) information about the target object (60) to the second relay device (300), when the first change determination unit (406) determines that there has been the change in the status of the target object (60).

2. The system (100) according to claim 1, wherein
the second relay device (300) includes
a second information reception unit (302) configured to receive information transmitted by the first information transmission unit (408);
a second information storage unit (304) configured to store the information received by the second information reception unit (302);
a second change determination unit (306) configured to determine whether there has been a change in a position of at least one of the first relay device (400) and the second relay device (300); and
a second information transmission unit (308) configured to transmit when the second change determination unit (306) determines that there has been the change in the position, the information stored in the second information storage unit (304) to a third relay device provided on a third network hierarchy level (20) higher than the second network hierarchy level (30).

3. The system (100) according to claim 2, wherein
the first information reception unit (402) receives the target object (60) information from the radio tag (50), by using a first communication scheme, and
the second information transmission unit (308) transmits the information stored in the second information storage unit (304) to the third relay device by using a second communication scheme having higher reliability than the first communication scheme.

4. The system (100) according to claim 3, wherein the first communication scheme is a communication scheme in which collision control is not performed, and the second communication scheme is a communication scheme in which the collision control is performed.

5. The system (100) according to any one of claims 1 to 4, wherein the first change determination unit (406) determines whether there has been a change in the status of the target object (60), based on a timing at which the first information reception unit (402) receives the target object (60) information from the radio tag (50) and a period in which the target object (60) information is not received from the radio tag (50).

6. The system (100) according to any one of claims 1 to 5, wherein
the first relay device (400) further includes a timing setting unit configured to set a timing at which the first information transmission unit (408) transmits the target object (60) information about the target object (60) to the second relay device (300),
the first information transmission unit (408) transmits the target object (60) information about the target object (60) to the second relay device (300) when the first change determination unit (406) detects the change between a first timing and a second timing that are set to be consecutive by the timing setting unit, and
the timing setting unit sets the timing in accordance with an instruction received via the second network hierarchy level (30) and the first network hierarchy level (40).

7. The system (100) according to any one of claims 1 to 6, wherein
the radio tag (50) includes a sensor,
the first information reception unit (402) receives detection information, detected by the sensor, from the radio tag (50),
the first information storage unit stores the detection information received by the first information reception unit (402),
the first relay device (400) includes an information aggregation unit configured to aggregate a plurality of pieces of detection information, the plurality of pieces of detection information including the detection information, received by the first information reception unit (402) from a plurality of radio tag (50)s, the plurality of radio tag (50)s including the radio tag (50), to generate aggregated information, and
the first information transmission unit (408) transmits the aggregated information, generated by the information aggregation unit, to the second relay device (300).

8. The system (100) according to claim 7, wherein
the first change determination unit (406) determines whether there has been a change in the status of the target object (60), based on the detection information received by the first information reception unit (402), and
the first information transmission unit (408) transmits the aggregated information to the second relay device (300), when the first change determination unit (406) determines that there has been the change in the status of the target object (60).

9. The system (100) according to claim 7 or 8, wherein
the information aggregation unit aggregates the plurality of pieces of detection information in accordance with an aggregation condition set in advance,
the first relay device (400) further includes an aggregation condition setting unit configured to set the aggregation condition, and
the aggregation condition setting unit sets the aggregation condition in accordance with an instruction received via the second network hierarchy level (30) and the first network hierarchy level (40).

10. The system (100) according to any one of claims 7 to 9, wherein the information aggregation unit generates the aggregated information only including the detection information indicating abnormality, among the plurality of pieces of detection information received by the first information reception unit (402) from the radio tag (50).

11. The system (100) according to any one of the preceding claims, wherein the first relay device (440) includes a first timing setting unit (410) configured to set a first timing at which the first information transmission unit (408) transmits the target object (60) information based on a first instruction received via a cloud network (20).

12. The system (100) according to any one of the preceding claims, wherein the second relay device (300) includes a second timing setting (310) unit configured to set a second timing at which the second information transmission unit (308) transmits the target object (60) information based on a second instruction received via the cloud network (20).

13. The system (100) according to any one of the preceding claims, wherein the second relay device (300) includes an information aggregation unit (412) configured to generate an average value or a representative value of the plurality of pieces of the information to form aggregated information; and a second timing setting unit (310) to set a second timing at which the second information transmission unit (308) transmits the aggregated information based on a second instruction received via the cloud network (20); wherein the second information transmission unit (308) transmits, when the second change determination unit (306) determines that there has been the change in the position, the aggregated information to a third relay device provided on a third network hierarchy level (20) higher than the second network hierarchy level (30).

## Patentansprüche

1. System (100), mit:
einer ersten Relaiseinrichtung (400), die auf einer ersten Netzwerkhierarchieebene (40) vorgesehen ist; und
einer zweiten Relaiseinrichtung (300), die auf einer zweiten Netzwerkhierarchieebene (30) vorgesehen ist, die der ersten Netzwerkhierarchieebene (40) übergeordnet ist, wobei
die erste Relaiseinrichtung (400) aufweist:
eine erste Informationsempfangseinheit (402), die dafür konfiguriert ist, Zielobjekt(60)information über ein Zielobjekt (60) zu empfangen, wobei die Zielobjekt(60)information durch ein dem Zielobjekt (60) hinzugefügtes Funketikett (50) gemäß einem vorgegebenen Zeitpunkt übertragen wird; und
eine erste Informationsspeichereinheit, die dafür konfiguriert ist, die durch die erste Informationsempfangseinheit (402) empfangene Zielobjekt(60)information zu speichern;
**dadurch gekennzeichnet, dass**
die erste Relaisvorrichtung (400) ferner aufweist:
eine erste Änderungsbestimmungseinheit (406), die dafür konfiguriert ist, basierend auf einem Status des Empfangs der Zielobjekt(60)information durch die erste Informationsempfangseinheit (402) zu bestimmen, ob eine Änderung in einem Status des Zielobjekts (60) aufgetreten ist; und
eine erste Informationsübertragungseinheit (408), die dafür konfiguriert ist, die Zielobjekt(60)information über das Zielobjekt (60) an die zweite Relaiseinrichtung (300) zu übertragen, wenn die erste Änderungsbestimmungseinheit (406) bestimmt, dass eine Änderung des Status des Zielobjekts (60) aufgetreten ist.

2. System (100) nach Anspruch 1, wobei die zweite Relaiseinrichtung (300) aufweist:
eine zweite Informationsempfangseinheit (302), die dafür konfiguriert ist, durch die erste Informationsübertragungseinheit (408) übertragene Information zu empfangen;
eine zweite Informationsspeichereinheit (304), die dafür konfiguriert ist, die durch die zweite Informationsempfangseinheit (302) empfangene Information zu speichern;
eine zweite Änderungsbestimmungseinheit (306), die dafür konfiguriert ist, zu bestimmen, ob eine Änderung in einer Position der ersten Relaiseinrichtung (400) und/oder der zweiten Relaiseinrichtung (300) aufgetreten ist; und
eine zweite Informationsübertragungseinheit (308), die dafür konfiguriert ist, wenn die zweite Änderungsbestimmungseinheit (306) bestimmt, dass die Änderung der Position aufgetreten ist, die in der zweiten Informationsspeichereinheit (304) gespeicherte Information an eine dritte Relaiseinrichtung zu übertragen, die auf einer dritten Netzwerkhierarchieebene (20) vorgesehen ist, die der zweiten Netzwerkhierarchieebene (30) übergeordnet ist.

3. System (100) nach Anspruch 2, wobei
die erste Informationsempfangseinheit (402) die Zielobjekt(60)information vom Funketikett (50) unter Verwendung eines ersten Kommunikationsschemas empfängt, und
die zweite Informationsübertragungseinheit (308) die in der zweiten Informationsspeichereinheit (304) gespeicherte Information unter Verwendung eines zweiten Kommunikationsschemas, das eine höhere Zuverlässigkeit als das erste Kommunikationsschema aufweist, an die dritte Relaiseinrichtung überträgt.

4. System (100) nach Anspruch 3, wobei das erste Kommunikationsschema ein Kommunikationsschema ist, bei dem keine Kollisionssteuerung ausgeführt wird, und das zweite Kommunikationsschema ein Kommunikationsschema ist, bei dem die Kollisionssteuerung ausgeführt wird.

5. System (100) nach einem der Ansprüche 1 bis 4, wobei die erste Änderungsbestimmungseinheit (406) basierend auf einem Zeitpunkt, zu dem die erste Informationsempfangseinheit (402) die Zielobjekt(60)information vom Funketikett (50) empfängt, und einer Periode, in der die Zielobjekt(60)information nicht vom Funketikett (50) empfangen wird, bestimmt, ob eine Änderung im Status des Zielobjekts (60) aufgetreten ist.

6. System (100) nach einem der Ansprüche 1 bis 5, wobei
die erste Relaiseinrichtung (400) ferner eine Zeiteinstelleinheit aufweist, die dafür konfiguriert ist:
einen Zeitpunkt einzustellen, zu dem die erste Informationsübertragungseinheit (408) die Zielobjekt(60)information über das Zielobjekt (60) an die zweite Relaiseinrichtung (300) überträgt,
die erste Informationsübertragungseinheit (408) die Zielobjekt(60)information über das Zielobjekt (60) an die zweite Relaiseinrichtung (300) überträgt, wenn die erste Änderungsbestimmungseinheit (406) die Änderung zwischen einem ersten Zeitpunkt und einem zweiten Zeitpunkt erfasst, die durch die Zeiteinstelleinheit als aufeinanderfolgend gesetzt sind, und
die Zeiteinstelleinheit den Zeitpunkt gemäß einer über die zweite Netzwerkhierarchieebene (30) und die erste Netzwerkhierarchieebene (40) empfangenen Anweisung einstellt.

7. System (100) nach einem der Ansprüche 1 bis 6, wobei
das Funketikett (50) einen Sensor aufweist,
die erste Informationsempfangseinheit (402) durch den Sensor erfasste Erfassungsinformation vom Funketikett (50) empfängt,
die erste Informationsspeichereinheit die durch die erste Informationsempfangseinheit (402) empfangene Erfassungsinformation speichert,
die erste Relaiseinrichtung (400) eine Informationsaggregationseinheit aufweist, die dafür konfiguriert ist, eine Vielzahl von Erfassungsinformationselementen zu aggregieren, wobei die Vielzahl von Erfassungsinformationselementen die Erfassungsinformation enthält, die durch die erste Informationsempfangseinheit (402) von einer Vielzahl von Funketiketten (50) empfangen wird, wobei die Vielzahl von Funketiketten (50) das Funketikett (50) enthält, um aggregierte Information zu erzeugen, und
die erste Informationsübertragungseinheit (408) die durch die Informationsaggregationseinheit erzeugte aggregierte Information an die zweite Relaiseinrichtung (300) überträgt.

8. System (100) nach Anspruch 7, wobei
die erste Änderungsbestimmungseinheit (406) basierend auf der durch die erste Informationsempfangseinheit (402) empfangenen Erfassungsinformation bestimmt, ob eine Änderung des Status des Zielobjekts (60) aufgetreten ist, und
die erste Informationsübertragungseinheit (408) die aggregierte Information an die zweite Relaiseinrichtung (300) überträgt, wenn die erste Änderungsbestimmungseinheit (406) bestimmt, dass die Änderung des Status des Zielobjekts (60) aufgetreten ist.

9. System (100) nach Anspruch 7 oder 8, wobei
die Informationsaggregationseinheit die Vielzahl von Erfassungsinformationselementen gemäß einer im Voraus eingestellten Aggregationsbedingung aggregiert,
die erste Relaiseinrichtung (400) ferner eine Aggregationsbedingungssetzeinheit aufweist, die dafür konfiguriert ist, die Aggregationsbedingung zu setzen, und
die Aggregationsbedingungssetzeinheit die Aggregationsbedingung gemäß einer über die zweite Netzwerkhierarchieebene (30) und die erste Netzwerkhierarchieebene (40) empfangenen Anweisung setzt.

10. System (100) nach einem der Ansprüche 7 bis 9, wobei
die Informationsaggregationseinheit die aggregierte Information erzeugt, die nur die Erfassungsinformation, die eine Anomalie anzeigt, aus der Vielzahl der durch die erste Informationsempfangseinheit (402) empfangenen Erfassungsinformationselemente vom Funketikett (50) enthält.

11. System (100) nach einem der vorhergehenden Ansprüche, wobei die erste Relaiseinrichtung (440) eine erste Zeiteinstelleinheit (410) aufweist, die dafür konfiguriert ist, einen ersten Zeitpunkt, zu dem die erste Informationsübertragungseinheit (408) die Zielobjekt(60)information überträgt, basierend auf einer über ein Cloud-Netzwerk (20) empfangenen ersten Anweisung einzustellen.

12. System (100) nach einem der vorhergehenden Ansprüche, wobei die zweite Relaiseinrichtung (300) eine zweite Zeiteinstelleinheit (310) enthält, die dafür konfiguriert ist, einen zweiten Zeitpunkt, zu dem die zweite Informationsübertragungseinheit (308) die Zielobjekt(60)information überträgt, basierend auf einer über das Cloud-Netzwerk (20) empfangenen zweiten Anweisung einzustellen.

13. System (100) nach einem der vorhergehenden Ansprüche, wobei die zweite Relaiseinrichtung (300) aufweist: eine Informationsaggregationseinheit (412), die dafür konfiguriert ist, einen Durchschnittswert oder einen repräsentativen Wert der Vielzahl von Informationselementen zu erzeugen, um aggregierte Information zu erzeugen, und eine zweite Zeiteinstelleinheit (310) zum Einstellen eines zweiten Zeitpunkts, zu dem die zweite Informationsübertragungseinheit (308) die aggregierte Information überträgt, basierend auf einer zweiten Anweisung, die über das Cloud-Netzwerk (20) empfangen wird, wobei
die zweite Informationsübertragungseinheit (308), wenn die zweite Änderungsbestimmungseinheit (306) bestimmt, dass die Änderung der Position aufgetreten ist, die aggregierte Information an eine dritte Relaiseinrichtung überträgt, die auf einer dritten Netzwerkhierarchieebene (20) vorgesehen ist, die der zweiten Netzwerkhierarchieebene (30) übergeordnet ist.

## Revendications

1. Système (100) comprenant :
un premier dispositif de relais (400) pourvu sur un premier niveau hiérarchique de réseau (40) ; et
un deuxième dispositif de relais (300) pourvu sur un deuxième niveau hiérarchique de réseau (30) supérieur au premier niveau hiérarchique de réseau (40), dans lequel
le premier dispositif de relais (400) comprend
une première unité de réception d'informations (402) conçue pour recevoir des informations d'objet cible (60) au sujet d'un objet cible (60), les informations d'objet cible (60) étant transmises par un marqueur radio (50) fixé à l'objet cible (60) conformément à un point du temps prédéterminé ;
une première unité de stockage d'informations conçue pour stocker les informations d'objet cible (60) reçues par la première unité de réception d'informations (402) ;
**caractérisé en ce que** le premier dispositif de relais (400) comprend en outre une première unité de détermination de changement (406) conçue pour déterminer si
il y a eu un changement d'état de l'objet cible (60), à partir d'un statut de réception des informations d'objet cible (60) par la première unité de réception d'informations (402) ; et
une première unité de transmission d'informations (408) conçue pour transmettre les informations d'objet cible (60) au sujet de l'objet cible (60) au deuxième dispositif de relais (300), lorsque la première unité de détermination de changement (406) détermine qu'il y a eu un changement dans le statut de l'objet cible (60).

2. Système (100) selon la revendication 1, dans lequel
le deuxième dispositif de relais (300) comprend
une seconde unité de réception d'informations (302) conçue pour recevoir des informations transmises par la première unité de transmission d'informations (408) ;
une seconde unité de stockage d'informations (304) conçue pour stocker les informations reçues par la seconde unité de réception d'informations (302) ;
une seconde unité de détermination de changement (306) conçue pour déterminer si
il y a eu un changement de position d'au moins un parmi le premier dispositif de relais (400) et le deuxième dispositif de relais (300) ; et
une seconde unité de transmission d'informations (308) conçue pour transmettre, lorsque
la seconde unité de détermination de changement (306) détermine qu'il y a eu le changement dans la position, les informations stockées dans la seconde unité de stockage d'informations (304) à un troisième dispositif de relais pourvu sur un troisième niveau hiérarchique de réseau (20) supérieur au deuxième niveau hiérarchique de réseau (30).

3. Système (100) selon la revendication 2, dans lequel
la première unité de réception d'informations (402) reçoit les informations d'objet cible (60) depuis le marqueur radio (50), en utilisant un premier schéma de communication, et
la seconde unité de transmission d'informations (308) transmet les informations stockées dans la seconde unité de stockage d'information (304) au troisième dispositif de relais en utilisant un second schéma de communication ayant une fiabilité supérieure au premier schéma de communication.

4. Système (100) selon la revendication 3, dans lequel le premier schéma de communication est un schéma de communication dans lequel la commande de collision n'est pas exécutée, et le second schéma de communication est un schéma de communication dans lequel la commande de collision est exécutée.

5. Système (100) selon l'une quelconque des revendications 1 à 4, dans lequel la première unité de détermination de changement (406) détermine s'il y a eu un changement dans l'état de l'objet cible (60), à partir d'un point du temps auquel la première unité de réception d'informations (402) reçoit les informations d'objet cible (60) depuis le marqueur radio (50) et une période dans laquelle les informations d'objet cible (60) ne sont pas reçues depuis le marqueur radio (50).

6. Système (100) selon l'une quelconque des revendications 1 à 5, dans lequel
le premier dispositif de relais (400) comprend en outre une unité de paramétrage de point du temps conçue pour paramétrer le point du temps auquel la première unité de transmission d'informations (408) transmet les informations d'objet cible (60) au sujet de l'objet cible (60) au deuxième dispositif de relais (300),
la première unité de transmission d'informations (408) transmet les informations d'objet cible (60) au sujet de l'objet cible (60) au deuxième dispositif de relais (300) lorsque la première unité de détermination de changement (406) détecte le changement entre un premier point du temps et un second point du temps qui sont paramétrés pour être consécutifs par l'unité de paramétrage de point du temps, et
l'unité de paramétrage de point du temps paramètre le point du temps conformément à une instruction reçue via le deuxième niveau hiérarchique de réseau (30) et le premier niveau hiérarchique de réseau (40).

7. Système (100) selon l'une quelconque des revendications 1 à 6, dans lequel
le marqueur radio (50) comprend un capteur,
la première unité de réception d'informations (402) reçoit des informations de détection, détectées par le capteur, depuis le marqueur radio (50),
la première unité de stockage d'informations stocke les informations de détection reçues par la première unité de réception d'informations (402),
le premier dispositif de relais (400) comprend une unité d'agrégation d'informations conçue pour agréger une pluralité d'éléments d'informations de détection, la pluralité d'éléments d'informations de détection comprenant les informations de détection, reçues par la première unité de réception d'informations (402) depuis une pluralité de marqueurs radio (50), la pluralité de marqueurs radio (50) comprenant le marqueur radio (50), pour générer des informations agrégées, et
la première unité de transmission d'informations (408) transmet les informations agrégées, générées par l'unité d'agrégation d'informations, au deuxième dispositif de relais (300).

8. Système (100) selon la revendication 7, dans lequel
la première unité de détermination de changement (406) détermine s'il y a eu un changement dans le statut de l'objet cible (60), à partir des informations de détection reçues par la première unité de réception d'informations (402), et
la première unité de transmission d'informations (408) transmet les informations agrégées au deuxième dispositif de relais (300), lorsque la première unité de détermination de changement (406) détermine qu'il y a eu le changement dans le statut de l'objet cible (60).

9. Système (100) selon la revendication 7 ou 8, dans lequel
l'unité d'agrégation d'informations agrège la pluralité d'éléments d'information de détection conformément à une condition d'agrégation paramétrée à l'avance,
le premier dispositif de relais (400) comprend en outre une unité de paramétrage de conditions d'agrégation conçue pour paramétrer la condition d'agrégation, et
l'unité de paramétrage de condition d'agrégation paramètre la condition d'agrégation conformément à une instruction reçue via le deuxième niveau hiérarchique de réseau (30) et le premier niveau hiérarchique de réseau (40).

10. Système (100) selon l'une quelconque des revendications 7 à 9, dans lequel l'unité d'agrégation d'informations génère les informations d'agrégation comprenant uniquement les informations de détection indiquant une anormalité, parmi la pluralité d'éléments d'informations de détection reçues par la première unité de réception d'informations (402) depuis le marqueur radio (50).

11. Système (100) selon l'une quelconque des revendications précédentes, dans lequel le premier dispositif de relais (440) comprend une première unité de paramétrage de point du temps (410) conçue pour paramétrer un premier point du temps auquel la première unité de transmission d'informations (408) transmet les informations d'objet cible (60) à partir d'une première instruction reçue via le réseau de cloud (20).

12. Système (100) selon l'une quelconque des revendications précédentes, dans lequel le premier dispositif de relais (300) comprend une seconde unité de paramétrage de point du temps (310) conçue pour paramétrer un second point du temps auquel la seconde unité de transmission d'informations (308) transmet les informations d'objet cible (60) à partir d'une seconde instruction reçue via le réseau de cloud (20).

13. Système (100) selon l'une quelconque des revendications précédentes, dans lequel le deuxième dispositif de relais (300) comprend une unité d'agrégation d'informations (412) conçue pour générer une valeur moyenne ou une valeur représentative de la pluralité d'éléments des informations pour former des informations agrégées ; et une seconde unité de paramétrage de point du temps (310) pour paramétrer un second point du temps auquel la seconde unité de transmission d'informations (308) transmet les informations agrégées à partir d'une seconde instruction reçue via le réseau de cloud (20) ; dans lequel la seconde unité de transmission d'informations (308) transmet, lorsque la seconde unité de détermination de changement (306) détermine qu'il y a eu le changement dans la position, les informations agrégées à un troisième dispositif de relais pourvu sur un troisième niveau hiérarchique de réseau (20) supérieur au deuxième niveau hiérarchique de réseau (30).
